# EUROPEAN PATENT SPECIFICATION

(11) **EP 0 959 549 B1**
(45) Date of publication and mention of the grant of the patent: **07.05.2003**
(21) Application number: 98109254.7
(22) Date of filing: 22.05.1998
(51) Int. Cl.: H02K 1/14, H02K 41/03, H02K 29/03, H02K 1/27

(54) **Brushless permanent magnet electric motor**
Bürstenloser permanenterregter Elektromotor
Moteur électrique sans balais à aimants permanents

(43) Date of publication of application: 24.11.1999
(73) Proprietor: Northmag B.V., 1118 CR Schipol (NL)
(72) Inventor: Tiemessen, Peter Christian, 2182 VP Hillegom (NL)
(74) Representative: Monti, Umberto

(56) References cited:
- WO-A-95/12912
- DE-C- 19 643 561
- US-A- 4 788 465
- US-A- 4 818 911
- US-A- 5 457 350
- PATENT ABSTRACTS OF JAPAN vol. 008, no. 099 (E-243), 10 May 1984 & JP 59 017834 A (TOKYO SHIBAURA DENKI KK), 30 January 1984

## Description

### BACKGROUND OF THE INVENTION

The present invention relates to brushless permanent magnet electric motors, both linear and curved (arc) electric motors.

In the following, for simplicity sake, reference will be made to a motor, although the invention can be applied also to generators.

Electronically commutated (brushless), permanent magnet motors are commonly used in general automation, robotics, handling and traction applications, because of their excellent torque/mass and power/mass ratio and controllability.

Many applications, however, ultimately require an actuation whose nature is linear and not rotary, e.g. the motion on the x-y plane of a machine tool table of a robotic gripper, or the linear motion of a locomotive. This is generally achieved by means of a mechanical geartrain which translates the rotary motor motion into a linear one, by means of pulleys, screws, rack and pinion or other devices.

While such mechanical solutions used to perform satisfactorily in the past, the progressive improvement in the dynamic performance of the motors on one side, and in the application requirements on the other is exposing the intrinsic limitations of mechanical transmissions.

It is therefore desirable to remove the mechanical linkage between motor and load realizing motors that are capable to provide a linear instead of a rotary motion directly.

Linear electric motors have existed for at least a century. They are known in all the motor technologies which are familiar in the rotary form, i.e. DC, induction, reluctance etc.

However, their diffusion is presently limited because they are perceived as expensive and limited in performance. In fact, all electric motors, rotary or linear, are intrinsically limited in the amount of force developed per unit of airgap surface. This limit stems from the density saturation field of ferromagnetic materials and the conductivity of copper. Standard motors achieve high power density by running at high speed; for this reason, all direct drives need an active volume which is larger, at the same power level, than that required for a motor which is geared down by a transmission. A further limitation stems from the fact that, in any linear motor, a linear bearing or support system is needed to overcome the magnetic attraction between the motor stationary and moving part. This is simply and economically done in a rotary motor, in which the symmetry nullifies the magnetic attraction, but is expensive and generally useless in a linear motor, in which the preferred solution is to let the motor ride on the support of the actuated machine.

As a consequence, a linear motor cannot be viewed or supplied as a stand-alone, standardized unit, but is generally an open device which needs to be integrated into a structure. The lack of standardization increases the production cost as the cost of tooling is spread on a low volume of parts.

In more detail, a standard or conventional permanent magnet, electronically switched linear motor consist of a stator and a rotor having the following characteristics.

The stator or section carrying the windings, generally limited in length, is made of a stack of laminations, and displays a number of slots, in analogy to a standard rotary motor. The slots are semiclosed, to limit magnetic detente (cogging) force; a multi phase, (generally three phase) winding is placed in the coils. To limit cogging, the stator is often skewed with respect to the normal of the motion axis. Because of the limited production, no automatic winding equipment is currently available for linear motor application.

The rotor is a steel structure often divided in sections. The structure is as long as the required stroke of the motor plus the length of the stator, and it carries a set of permanent magnets which are generally glued manually on a steel baseplate. This operation is critical and labour intensive but the brittleness of rare earth magnets and the small airgap size left no other option so far to linear motor manufacturers.

At present, linear motors are produced in small lots, with limited product automation, and new applications requiring different sizes, face high non recurrent tooling costs.

A similar problem exists in the field of rotary actuation of large structures, such as rotary tables for machine tools, radar antennas, or telescopes. In this case the elasticity of the structure limits the control bandwidth which can be reached with a mechanical transmission. A large ring motor, embracing the whole structure, would be an optimal solution, but would require an expensive tooling for each diameter and is thus considered generally unpractical on economical grounds.

DE-C-19643561 discloses a brushless permanent magnet electric motor with a radial airgap, provided with individually wound poles, wherein with the magnetic poles are made of axially stacked metal sheets having indentations on the edges forming the wall of the slot.

US-A-4818911 refers to the stator of a radial-airgap brushless permanent magnet motor in which a convex portion of each pole is fixedly inserted into a concave portion of the cylindrical yoke member.

US-A-5 457 350 discloses a cylindrical laminated core for rotating electrical machines such as brushless motors, comprising a plurality of single sheet cores, each single sheet core being formed by arranging a plurality of salient poles continuously on a belt-like yoke plate and winding such plate so as to be cylindrical while joining both ends of the belt-like yoke plate.

Italian patent No. 1 258 265 discloses a large diameter brushless linear or curved motor comprising a rotor and a stator with a flat airgap between them. Such a motor has the drawback of requiring an expensive and dedicated tooling in order to manufacture the stator segments of the motor with the exact curvature required by the individual application. Since most large direct drive motors are one of a kind projects or anyway they do not involve large production runs, requiring a dedicated tooling is a practical and economical hindrance.

It is an object of the present invention to develop a novel motor structure, which is suitable for both linear and curved (arc) permanent magnet motors, which can be manufactured economically and automatically with existing, state of the art winding equipment.

It is another object of the invention to develop a novel motor structure, in which the cost of the lamination tooling is minimised, and in which the same tooling can be used for different motor sizes and - in the case of curved motors - for different airgap diameters;

It is another object of the invention to develope a novel motor structure, which achieves a higher thrust density per airgap surface with respect to the currently available motors, thus realizing a motor with an increased thrust with a given volume and optimizing the use of the permanent magnet materials.

A still further object of the invention is to develope a novel linear motor structure, in which the rotor can be assembled automatically without bonding or glueing.

The above and other objects and advantages of the invention, such as those resulting from the following description, are accomplished through a motor structure as claimed in claim 1. Further advantageous characteristics are recited recited in the dependent claims.

Preferred embodiments of the invention will now be described, as illustrating and not limiting examples, with reference to the accompanying drawings, in which:
Fig. 1 is partial cross sectioned view of a linear motor strucure according to the invention;
Fig. 2 illustrates a member of a stator according to the present invention;
Fig. 3 is a cross section along the axis of motion of a generalized linear motor realized according to the invention;
Fig.s 4 and 5 show a detail of the assembling of the rotor plates without gluing or bonding; and
Fig. 6 illustrates an embodiment of the invention in the shape of a cylindrical torque motor, which retains all the avove mentioned advantages over conventional motors.

Throughout all the drawings, the same references have been used to indicate equal or similar parts.

### DESCRIPTION OF PREFERRED EMBODIMENTS

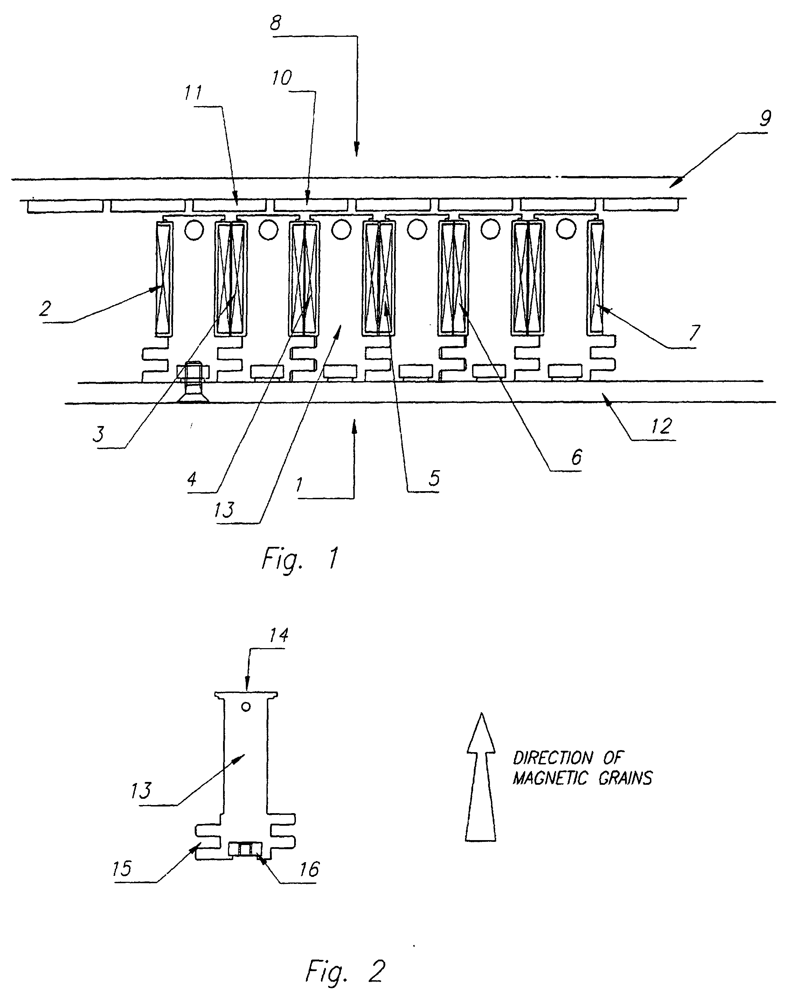

The novel motor structure summarized in Fig.1, consists of a stator 1, which is made of ferromagnetic material and carries a number of windings 2, 3, 4, 5, 6, 7 and a rotor 8, which is also made of one or several plates of a ferromagnetic material 9, suitably joined to form the required travel length, carrying a set of alternating polarity permanent magnets 10, 11, arranged at evenly spaced intervals, defined as pole pitch. The stator is mounted on a base plate 12.

According to the standard practice, the pitch of the slots in the stators, is normally much shorter than the pole pitch in order to distribute several windings in a pole pitch so as to obtain a multipolar winding.

On the contrary, in the stator according to the invention, the pitch of the slots in the stators is similar to the pole pitch, either slightly longer or slightly shorter, and each stator tooth 13 is surrounded by a single, independent winding. In this manner, each tooth winding can be regarded as an individual single phase motor. In the example in Fig.1, each tooth is shorter than a pole pitch by a 1/6th of the pole pitch, i.e. 30 electrical degrees. As a consequence, six individual single phase motors exist with phase shifths of 0, 30 + 180, 60 + 360, 90 + 540, 120 + 720, 150 + 800 electrical degrees, respectively.

A three phase motor can thus be obtained by connecting in series the two ends of coils 2,3 to form phase U; coils 8,9 to form phase W, and finally the reverse is done with coils 9,10 to form phase Z.

For the motor to operate smoothly, however, the magnetic return path of the permanent magnets must be closed irrespective of the rotor position. The structure of Fig. 1, in which an odd number (five) of magnets, is covered would create a position variable amount of stray flux, and consequently a certain amount of cogging. However the motor thrust can be further improved from this viewpoint.

In order to address the above mentioned manufacturing problems, as well as to increase thrust density and achieve modularity, the stator according to the present invention is based on a single tooth lamination such as the one generally depicted in Fig.2. Such tooth lamination is made of a grain oriented material, thus achieving higher saturation flux density than normal motors, with the direction of preferred flux as shown by the arrow, and comprises a parallel tooth proper 13, which will carry the winding, an expanded head 14 which is used to minimize cogging and to reduce the magnet flux path reluctance, and a root 15 which carries a set of parallel dovetails on either side. The stator is stamped with a stacking (i.e. interlocking) tool or is later stacked, possibly on a steel bar (not shown) bearing positioning threaded holes 16.

With reference now to Fig. 1, the stator lamination, stacked into an individual tooth, is wound on a standard coil winding machine, thus enabling both automated manufacturing with no special equipment and the realization of an ordered, layered winding, which results in a copper density about 80% greater than that of the standard bundled winding, and in a correspondingly higher specific thrust.

When the individual teeth are wound, they are stacked on a baseplate 12 (see Fig. 1) so that the dovetails fit into each other creating a magnetic field return path between them. The dovetails are deep enough that the magnetic flux can be carried in full by the horizontal segments of the dovetails, so that even if the dovetail is not completely fitted the flux can pass unhindered. This makes it possible to stack the wound teeth not only along a line but also in a curve, or arc, lying in the plane perpendicular to that of the drawing in Fig. 1, thus realizing large diameter arc motors with a single, inexpensive tool.

With the embodiment thus described, the first three objects of the invention, i.e.automated winding on standard equipment, simple tool which can be used on many sizes and shapes, and higher thrust density (through a higher copper density and the use of crystal oriented material) are achieved.

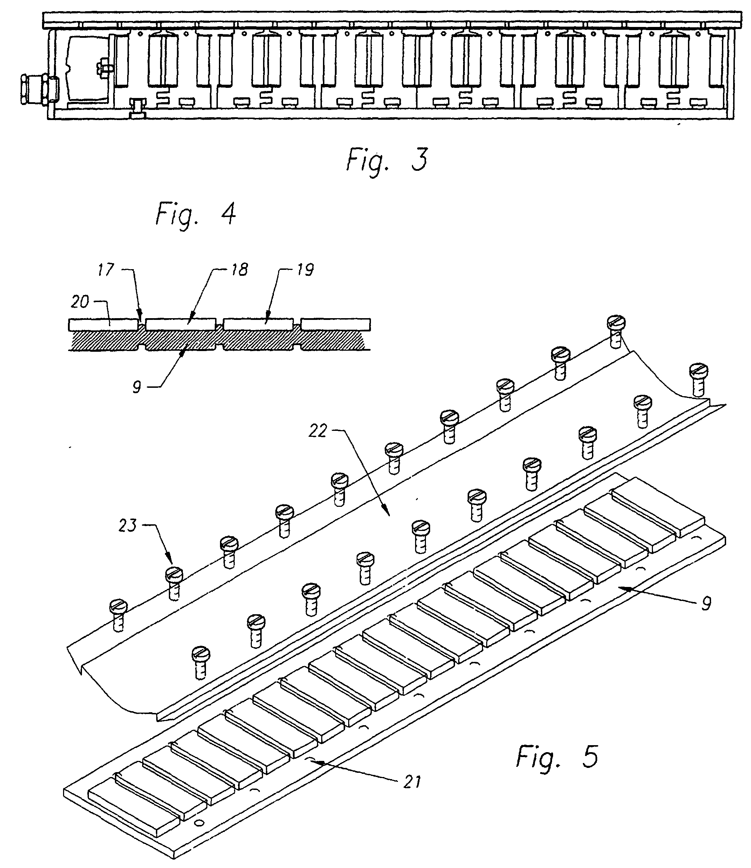

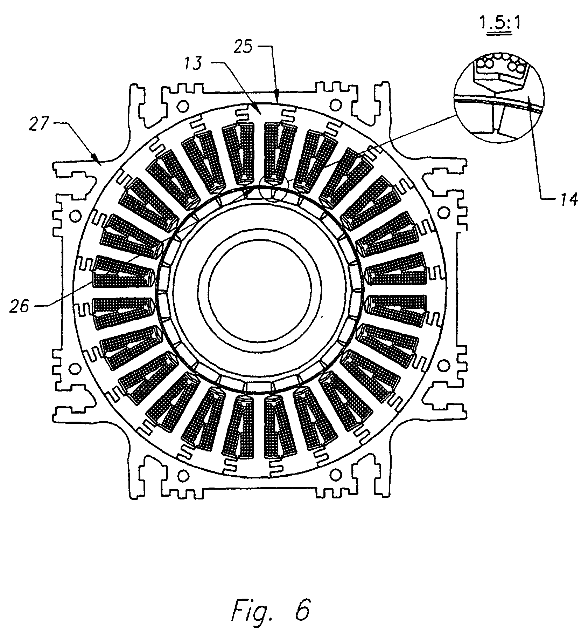

A further improved embodiment is described in Fig. 3, in which the cogging thrust, which plagues all linear motor, and which is caused by the edges the sides of the stator attracting the open magnets on either side, is minimized with a novel technique.

In this embodiment, the stator teeth are wound and coupled in twin sets, which are then spaced apart by varying multiples of the reverse of the number of teeth n, in the given example by multiples of 1/12th of the polar pitch. In practice, a full motor is divided in six individual motors, each having a cogging thrust with periodicity equal to the pole pitch and phase according to the positioning of the set on the horizontal axis. By properly selecting such spaces, the harmonics of the cogging thrust up to the order n/2-1 can be harmonically eliminated without any need of skewing either stator or rotor. Furthermore, the spaces must be appropriate on the airgap, but are irrelevant elsewhere, so that the teeth can be asymmetrized to increase the coil filling factor. In order to use a single tool, the asymmetrical teeth carry a single dovetail; in fact, the grouping of teeth in sets of 2 with 1/12 of pole pitch phase shift results in most of the magnet flux passing between the teeth of the set. The maximum field which escapes the set, and which needs to cross the mounting plate, is 2*sin(π/(12*2)) i.e. 25% of the peak magnet flux. Such a low flux density can be safely leaked through the mounting base without performance degradation. Although cogging harmonic elimination has been described through grouping in sets of 2, other grouping strategies are possible as will be evident to the skilled in the art.

As mentioned above, an object of the invention is the industrial realization of a low cost rotor structure without bonding, which is now described with reference to Fig.s 4 and 5.

According to the invention, the indefinitely long rotor structure is made up of a set of equal steel plates 9, or modules, which are as long as an even number of poles, e.g. 20 poles each. The plates are made of cold rolled steel cut in parallelepipeds. A set of cylindrical bumps 17 are cold formed with a NC notching machine, with the same pitch as that of the magnets 18, 19, 20. In the same operation, fixing holes 21 are punched through the plate, as well as some more holes, positioned at the sides of the magnet race, which will be used for locking the magnets in place.

During assembly, the magnetized magnets are placed on the plate and self lock in place due to their reciprocal magnetic attraction, their exact positioning being ensured by the bumps 17. A shield 22, made of non magnetic stainless steel, or bronze, and preformed like a cylindrical spring, is then placed on the magnets and fastened in place by means of rivets or screws 23. The shield is then straightened by the shape of the magnets and applies a compression load on all magnets, performing the magnet locking and compensating for the thickness tolerance of the individual magnets.

The realization of a novel rotary motor with increased torque density and lower manufacturing cost, is described with reference to Fig. 6, in which the dovetailed, individual teeth 13 are made with a circular, instead of linear, base 25 and top 26. Additionally, the tooth expansion 14 is also shaped so as to dovetail at each side with the other teeth, although such feature is very small, in the order of 0.5 mm, to limit magnetic leakage. The motor is manufactured piecewise as described in the first embodiment, and then assembled into a cylinder. The assembly is turned into a solid, stiff part by inserting it into a frame 27, e.g. by heating the frame, so that the frame applies a uniform inward pressure on the structure thus loading the dovetails on the teeth expansions 14. The play of traction on the frame and compression at the teeth heads results in much higher stiffness than that of a conventional motor, in which all teeth are free at the tips and flex with the magnetic flux, and therefore provides for quieter operation.

This embodiments furthermore allows to realize a motor with crystal oriented material in which the preferred orientation is radial. This feature, together with the higher winding density due to the layered winding, results in a considerably higher torque than normally achievable.

Another advantage of the motor according to the invention resides in the limited waste of magnetic material in punching the teeth, when compared with the large amount of material wasted punching complete stator disks.

Although the invention has been disclosed with reference to some preferred embodiments, modifications are possible within the scope of the appended claims.

## Claims

1. A brushless linear or curved motor comprising:
a stator (1) carrying a number of windings (2 - 8) and made of a stack of laminations defining stator teeth (13) provided with a number of semiclosed slots;
a rotor (8) formed as a steel structure carrying a set of permanent magnets (10, 11); and
a flat airgap between said stator (1) and rotor (8);
**characterized in that** each stator tooth is formed by a set of individual lamination stacklets comprising a tooth proper (13) and a set of parallel interlocking members (15) on either side of the tooth in order to exchange magnetic flux for creating a magnetic field return path even if said interlocking members (15) are not completely fitted one into the other; and **in that** each stator tooth (13) is surrounded by a single independent winding (2-7) which are piecewise assembled into the motor.

2. A motor as claimed in claim 1, **characterized in that** said lateral interlocks (15) of said teeth (13) are magnetically oversized so that the spacing between teeth can be adjusted without tool modification, so as to cater for various pole pitches or to adjust for the bending of the motor into an arc on a plane parallel to the airgap.

3. A motor as claimed in claim 2, **characterized in that** said teeth (13) are made of crystal oriented material, with preferred direction of magnetization along the tooth axis;

4. A motor as claimed in Claim 1, **characterized in that** said winding (2-7) is applied to the tooth (13) prior to assembling the teeth on the motor.

5. A motor as claimed in Claim 1, **characterized in that** said winding (2-7) is layered and comprises electric conductors having a square or rectangular cross section.

6. A motor as claimed in Claim 2, **characterized in that** said teeth (13) are grouped in subsets, and the subsets are spaced so as to perform harmonic elimination of cogging thrust components.

7. A motor as claimed in Claim 1, and 6 **characterized in that** after the placement of the teeth heads (14) to perform cogging thrust harmonic elimination, the teeth bodies (13) are offset laterally to increase copper filling factor.

8. A motor as claimed in Claim 1, **characterized in that** said rotor (8) is made of a set of steel plates, in which the magnets (10, 11) are located by cold formed bumps (17) on the plate surface, and are locked into place by a preloaded spring fastened in the airgap between said rotor (8) and stator (1).

## Patentansprüche

1. Bürstenloser Linear- oder Rundmotor mit:
- einem Stator (1), der eine Anzahl von Wicklungen (2-8) trägt und aus einem Statorzähne (13) bildenden Lamellenstapel gebildet und mit einer Anzahl von halbgeschlossenen Schlitzen versehen ist;
- einem aus einer Stahlstruktur gebildeten Rotor (8), der einen Satz von Permanentmagneten (10,11) trägt; und
- einem flachen Luftspalt zwischen dem Stator (1) und dem Rotor (8);
**dadurch gekennzeichnet, dass** jeder Statorzahn durch einen Satz individueller kleiner Lamellenstapel gebildet ist, die einen Zahnkörper (13) bilden und auf beiden Seiten des Zahns einen Satz paralleler Verriegelungselemente (15) zum Magnetflussdurchtritt haben, um einen Magnetfeldrückschlussweg auch dann zu bilden, wenn die Verriegelungselemente (15) nicht völlig ineinandergreifen, und dass jeder Statorzahn (13) von einer einzelnen unabhängigen Wicklung (2-7) umgeben ist, und diese Wicklungen einzeln in den Motor einsetztbar sind.

2. Motor nach Anspruch 1, **dadurch gekennzeichnet, dass** die seitlichen Verriegelungen (15) der Zähne (13) magnetisch überdimensioniert sind, so dass der Raum zwischen Zähnen ohne Werkzeugänderung so bemessen werden kann, dass verschiedene Polteilungen möglich sind oder dass ein Biegen des Motors in eine Krümmung in einer zum Luftspalt parallelen Fläche möglich ist.

3. Motor nach Anspruch 2, **dadurch gekennzeichnet, dass** die Zähne (13) aus einem Material mit orientierter Kristallstruktur hergestellt sind, deren bevorzugte Magnetisierungsrichtung längs der Zahnachse verläuft.

4. Motor nach Anspruch 1, **dadurch gekennzeichnet, dass** die Wicklung (2-7) vor der Zahnmontage im Motor auf den Zahn (13) aufgebracht wird.

5. Motor nach Anspruch 1, **dadurch gekennzeichnet, dass** die Wicklung (2-7) lagenförmig ausgebildet ist und elektrische Leiter mit quadratischem oder rechteckigem Querschnitt hat.

6. Motor nach Anspruch 2, **dadurch gekennzeichnet, dass** die Zähne (13) in Unter-Sätzen gruppiert sind, welche solche Abstände haben, dass sich eine harmonische Eliminierung von Cogging-Kraftkomponenten ergibt.

7. Motor nach Anspruch 1 und 6, **dadurch gekennzeichnet, dass**, nachdem die Zahnköpfe (14) im Sinne einer harmonische Cogging-Krafteliminierung platziert sind, die Zahnkörper (13) zur Verbesserung des Kupferfüllfaktors seitlich versetzt werden.

8. Motor nach Anspruch 1, **dadurch gekennzeichnet, dass** der Rotor (8) aus einem Satz Stahlplatten besteht, in welchen die Magnete (10,11) mit Hilfe kaltgeformter Vorsprünge (17) auf der Plattenoberfläche platziert sind und durch eine vorgespannte Feder festgehalten werden, die im Luftspalt zwischen Rotor (8) und Stator (1) befestigt ist.

## Revendications

1. Moteur courbe ou linéaire sans balais comprenant :
un stator (1) supportant un certain nombre d'enroulements (2 - 8) et fait d'une pile de
structures lamifiées définissant des dents de stator (13) dotées d'un certain nombre de fentes semi-ouvertes ;
un rotor (8) formé comme une structure d'acier supportant un ensemble d'aimants permanents (10, 11) ; et
un entrefer plat entre ledit stator (1) et rotor (8) ;
**caractérisé en ce que** chaque dent de stator est formée par un ensemble de différentes petites piles lamifiées comprenant une dent propre (13) et un ensemble d'éléments d'accrochage parallèles (15) sur chaque côté de la dent, afin d'échanger un flux magnétique pour créer un trajet de retour du champ magnétique même si lesdits éléments d'accrochage (15) ne sont pas complètement ajustés l'un dans l'autre ; et **en ce que** chaque dent de stator (13) est entourée par un simple enroulement indépendant (2-7) qui sont assemblés pièce par pièce dans le moteur.

2. Moteur selon la revendication 1, **caractérisé en ce que** lesdits accrochages latéraux (15) desdites dents (13) sont surdimensionnés de façon magnétique de sorte que l'espacement entre les dents peut être ajusté sans modification d'outil de manière à tenir compte de divers écartements polaires ou à ajuster la flexion du moteur en arc ou sur un plan parallèlement à l'entrefer.

3. Moteur selon la revendication 2, **caractérisé en ce que** lesdites dents (13) sont constituées d'une matière à orientation des monocristaux, avec sens préféré de l'aimantation le long de l'axe des dents.

4. Moteur selon la revendication 1, **caractérisé en ce que** ledit enroulement (2-7) est appliqué à la dent (13) avant d'assembler les dents sur le moteur.

5. Moteur selon la revendication 1, **caractérisé en ce que** ledit enroulement (2-7) est en couches et comprend des conducteurs électriques ayant une section transversale carrée ou rectangulaire.

6. Moteur selon la revendication 2, **caractérisé en ce que** lesdites dents (13) sont groupées en sous-ensembles, et les sous-ensembles sont espacés de manière à réaliser la suppression harmonique des éléments de poussée à denture.

7. Moteur selon la revendication 1, et 6 **caractérisé en ce que** après le placement des têtes de dent (14) pour réaliser la suppression harmonique des éléments de poussée à denture, les corps de dents (13) sont décalés latéralement pour augmenter le facteur de remplissage du cuivre.

8. Moteur selon la revendication 1, **caractérisé en ce que** ledit rotor (8) est fait d'un ensemble de plaques d'acier, dans lequel les aimants (10, 11) sont fixés par des coups (17) formés à froid sur la surface de plaque, et sont bloqués dans leur emplacement par un ressort préchargé fixé dans l'entrefer entre ledit rotor (8) et le stator (1).
